# EUROPEAN PATENT SPECIFICATION

(11) **EP 1 892 933 B1**
(45) Date of publication and mention of the grant of the patent: **11.05.2016**
(21) Application number: 06022315.3
(22) Date of filing: 25.10.2006
(51) Int. Cl.: H04M 1/253

(54) **Home gateway containing Voip, PSTN and POTS interfaces**
Heimübergangseinheit die VoIP, PSTN und POTS Schnittstellen aufweist
Dispositif passerelle domestique contenant des interfaces VoIP, PSTN et POTS

(30) Priority: 25.08.2006 CN 200610121870
(43) Date of publication of application: 27.02.2008
(73) Proprietor: Realtek Semiconductor Corp., Hsinchu 300 (TW)
(72) Inventor: Lin, Ming-Lih, Pei Tou Chu Chi Yen Li Taipei City (TW); Shih, Wen-Cheng, Tung Chu Chen Hsing Li Hsin Chu City (TW); Kuo, Ting-Chien, Hsing Yi Chu Cheng Ho Li Taipei City (TW)
(74) Representative: Ter Meer Steinmeister & Partner

(56) References cited:
- WO-A-2004/059961
- WO-A-2005/018211
- WO-A-2006/048369
- US-A1- 2002 006 137
- US-A1- 2004 240 432

## Description

### BACKGROUND OF THE INVENTION.

### Field of the invention

The invention relates generally to voice communication systems, and more specifically to a voice communication system using a personal computer for achieving a public switch telephone network (PSTN) communication and an internet communication.

The telephone is a very important communication tool that most people are comfortable with. Currently, telephones generally are divided into PSTN-based phones and telephones compliant with a voice over internet protocol (hereinafter described as "VOIP-based phones"). It will be a great convenience to use telephones if PSTN-based phones and VOIP-based phones are integrated.

WO 2004/059961 A1 describes a communication apparatus connected to a general subscriber telephone set or a broadband telephone set, to communicate over the public switched telephone network. The apparatus includes a filter converting signals such as to satisfy signal conditions prescribed for the telephone network. The apparatus also includes a terminal class determiner for determining the class of the telephone set connected, and a circuit for changing at least the sampling frequency at which the analog signals from the telephone set are sampled. This establishes high quality in broadband voice communications. The terminal class determiner automatically determines the class of the telephone set at any timing of a call sequence by detecting a band component of the signals from the telephone set, a predetermined frequency of a signal intermittently transmitted from the telephone set or the characteristics of the telephone set.

### SUMMARY OF THE INVENTION

In view of the above-mentioned problems, an object of the invention is to provide a voice communication system.

Another object of the invention is to provide a communication control device for achieving a PSTN communication and an internet communication.

The object is solved by the features of the indenpendent claims.

Preferably, the host comprises: a processing module for performing data processing; a storage module coupled to the processing module for providing data access; a network control circuit coupled to the processing module and the internet for controlling sending and receiving network packets; and, an audio circuit coupled to the processing module for performing sending and receiving operations of audio data.

In a further embodiment, the communication control device comprises: an interface circuit coupled to the host for providing a signal with a specified voltage level according to audio data generated by the host; a switching circuit coupled to the interface circuit, a PSTN interface and a telephone interface, for coupling the telephone interface with one of the interface circuit and the PSTN interface according to a switching signal generated by the host; a detecting circuit coupled to a telephone line located between the host and the PSTN interface for detecting the state of the PSTN line and outputting a detecting result to the host; a filter coupled to a telephone line located between the audio circuit and the telephone interface.

Further scope of the applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG. 1 shows a block diagram of a voice communication system according to a first embodiment of the invention.
FIG. 2 shows a detailed diagram of a portion of the first embodiment.
FIG. 3 shows a detailed diagram of the subscriber line interface circuit.
FIG. 4A is a flow chart illustrating a voice communication method according to the invention.
FIG. 4B is a flow chart illustrating a step of analyzing and communicating of FIG. 4A.

### DETAILED DESCRIPTION OF THE INVENTION

The voice communication system of the invention will be described with reference to the accompanying drawings.

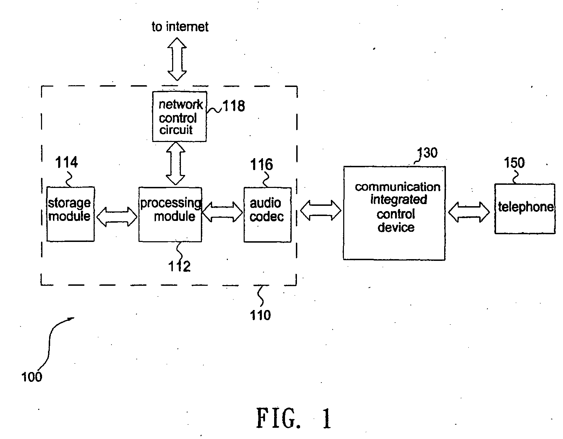

FIG. 1 shows a block diagram of a voice communication system according to a first embodiment of the invention. Referring to FIG. 1, a voice communication system 100 according to the invention includes: a host 110, for establishing an internet communication, wherein the host could be a desktop computer, a notebook, a tablet personal computer (PC), a personal digital assistant and a cellular phone; a communication control device 130, for achieving the internet communication and the PSTN communication, wherein the communication control device 130 could be built inside the host 110, or be a external device to the host 110; a telephone 150 coupled to the communication control device 130, for placing or receiving VOIP-based calls or PSTN-based calls. In an alternative embodiment of the invention, the host 110 further comprises a housing (not shown) and the communication control device 130 is set in the housing.

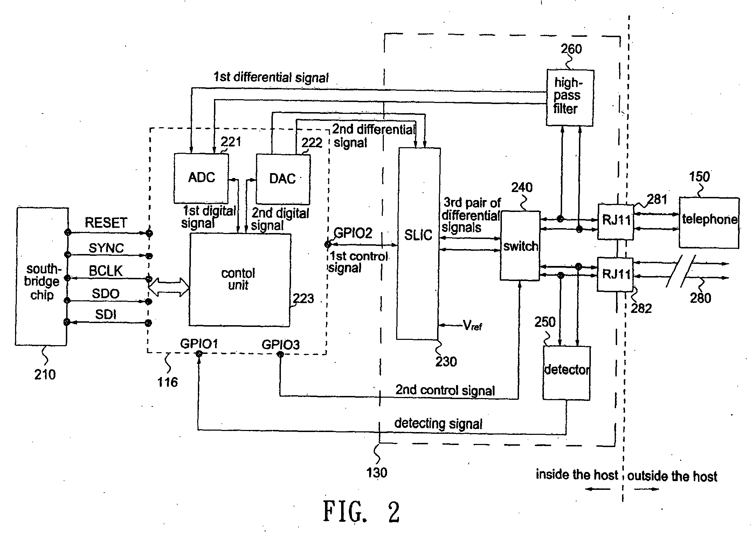

Referring also to FIG. 1, the host 110 includes a processing module 112 for performing data processing, wherein the processing module 112 includes a processor and a chipset (not shown) (comprising a south-bridge chip and a north-bridge chip (a south-bridge 210 shown in FIG. 2)), and wherein the implementation of the processor and the chipset is well known to those skilled in the art and therefore will not be described herein; a storage module 114 coupled to the processing module for providing data access, wherein the storage module 114 according to this embodiment includes a nonvolatile storage unit (such as hard disk) and a volatile storage unit (such as a dynamic random access memory) (not shown), and wherein the implementation of the storage module 114 is also well known to those skilled in the art and thus will not be described herein; a network control circuit 118 coupled to the processing module 112 and the internet, for controlling sending and receiving network packets, wherein the network control circuit 118 could be a stand-alone network interface card, or a network chip integrated into the chipset embedded in the processing module 112, and wherein the implementation of the network control circuit 118 is also well known to those skilled in the art and thus will not be described herein; an audio codec 116 coupled to the processing module 112, for performing sending and receiving operations of audio data, wherein the audio codec 116 could be a stand-alone audio card, or an audio chip integrated into the chipset embedded in the processing module 112. In the first embodiment, the storage module 114, the network control circuit 118 and the audio codec 116 are coupled to the chipset (not shown) in the processing module 112. Besides, the network control circuit 118 and the audio codec 116 are integrated into the chipset. Further, the host 110 has a network interface (such as a RJ-45 interface) (not shown) through which the network control circuit 118 is coupled to an internet line.

FIG. 2 shows a detailed diagram of a portion of the first embodiment. As shown in FIG. 2, the communication control device 130 of this embodiment includes: a high-pass filter 260 for filtering low-frequency signals that the telephone 150 transmits and generating a first differential signal; a subscriber line interface circuit (SLIC) 230 for providing a third differential signal with a specified voltage level according to a first control signal and a second differential signal output from the audio codec 116; a detector 250 for detecting the state of a PSTN line 280 and generating a detecting signal; a switch 240 for connecting the telephone 150 with the internet via the host 110, or coupling the telephone 150 with the PSTN line 280 according to a second control signal output from the audio codec 116; two RJ-11 interfaces 281, 282 coupled to the telephone 150 and the PSTN line 280 respectively.

Referring also to FIG. 2, two RJ-11 interfaces 281, 282 of the host 110 are coupled to the telephone 150 and the PSTN line 280 respectively. And, the high-pass filter 260, coupled to a telephone line (consisting of a tip wire and a ring wire) located between the interface 281 and the switch 240, filters low-frequency ring signals and generates a first differential signal. The detector 250 detects the state of the PSTN line 280, e.g., the voltage variations on the PSTN line 280, to generate a detecting signal. There are three typical states on the conventional PSTN line 280. They are an on-hook state, an off-hook and a ring state. The voltages on the PSTN line 280 vary with different states. Since the states and the variations on the PSTN line 280 are well known, the description is omitted herein. The first terminal of the switch 240 is connected to the telephone 150 and the high-pass filter 260 and its second terminal receives the third differential signal, with its third terminal connected to the PSTN line 280. According to the second control signal, the switch 240 couples the telephone 150 with the internet via the host 110, or with the PSTN line 280.

Referring also to FIG. 2, both of the south-bridge chip 210 and the audio codec 116 are mounted on a motherboard (such as a computer motherboard) in this embodiment. An analog-to digital converter 221 embedded in the audio codec 116 receives and converts the first differential signal into a first digital signal. In general, the first digital signal includes voice data and/or keypress data. With respect to voice data, they are sent from a control unit 223 (e.g., a DSP, a MPU or a logic circuit etc.) to the south-bridge chip 210 via a high definition audio interface, and then processed using the hardware and the software of the host 110. For example, while transmitted via the internet to a remote device, the voice data will be first processed using a VOIP-compliant program (such as a SKYPE program) which resides in and is executed on the host 110, and then be delivered to the remote device via the internet. On the contrary, while receiving the voice data from the remote device via the internet, the host 110 processes the voice data using the VOIP-compliant program and then transmits the voice data to the audio codec 116 via the south-bridge chip 210 and the high definition audio interface. Next, the audio codec 116 receives a second digital signal and then a digital-to-analog converter 222 converts the second digital signal into the analog second differential signal for output to the subscriber line interface circuit 230. Meanwhile, the control unit 223 outputs a first control signal to the subscriber line interface circuit 230 for causing the subscriber line interface circuit 230 to generate a third differential signal responsive to the second differential signal.

As previously described, the operating voltages of the motherboard and the telephone are generally different, i.e., the voltage level of signals transmitted on the motherboard different from the voltage level of signals transmitted by the telephone. The operating voltage of the motherboard is about 3-5V, whereas the operating voltage of the telephone is about (-5)-(-50)V. Therefore, the subscriber line interface circuit 230 mainly performs conversions between two different operating voltages. In this embodiment, the subscriber line interface circuit 230 converts the reference voltage V_{ref} into different DC voltage levels so as to convert the second differential signal into the third differential signal compliant with the telephone signaling form after receiving the enabled first control signal. Subsequently, the switch 240 receives and then outputs the third differential signal to the telephone 150 via the interface 281.

On the other hand, if the first digital signal contains the keypress data generated by using the telephone 150, the control unit 223 decodes the first digital signal to obtain the keypress data according to a dual tone multiple frequency telephone signaling standard. In the case where the keypress data are a telephone number that a user dials to place an outgoing phone call, the control unit 223 transmits the telephone number to the host 110 so that the host 110 processes this telephone number using a VOIP-compliant program (such as SKYPE program). In addition, the control unit 223 can accordingly emulate a dial tone, a dialing keypad tone, a ring tone or a busy tone, and then return it to the telephone 150 through the digital-to-analog converter 222, the subscriber line interface circuit 230, the switch 240 and the interface 281. Furthermore, the user is allowed to remotely control the VOIP-compliant program from the keypad on the telephone handset if the above-mentioned keypress data correspond to a predetermined data, e.g., the keypress data equal to "##". For example, numeral keys "2", "8", "4", "6", "5 or #" on the keypad are employed to remotely control the cursor on the operating interface of the VOIP-compliant program for different directions and operations, such as "↑", "↓", "←","→" nd "enter". For the case where the keypress data correspond to another predetermined data, e.g., the keypress data equal to "**", the control unit 223 outputs the second control data to configure the switch 240 via GPIO3 to perform a mode switch between the internet and the PSTN line, i.e., the switch 240 being configured to couple the telephone 150 with either the PSTN line 280 or the subscriber line interface circuit 230.

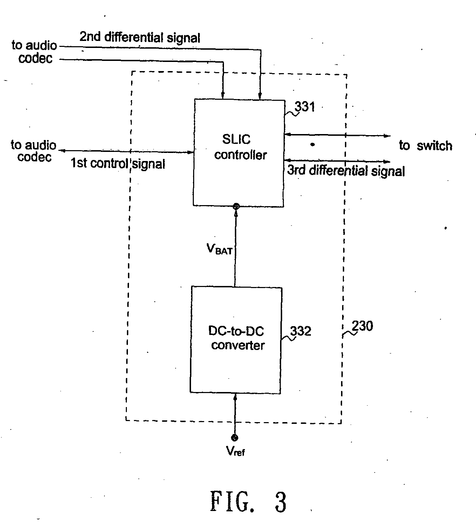

FIG. 3 shows a detailed diagram of the subscriber line interface circuit. Recall that the subscriber line interface circuit 230 mainly performs conversions between two different operating voltages. Referring to FIG. 3, the subscriber line interface circuit (SLIC) 230 includes a SLIC controller 331 and a DC-to-DC converter 332. The DC-to-DC converter 332 converts the reference voltage level V_{ref} into another DC voltage level V_{BAT} which is adapted to generate the DC voltage level of two signals Tip, Ring on the PSTN line. The DC voltage level is about (-5)-(-50)V. According to this embodiment, the reference voltage V_{ref} is about 12V and the DC voltage level V_{BAT} is about -90V. The audio codec 116 controls the SLIC controller 331 using the first control signal. If the first control signal is enabled, the SLIC controller 331 converts the second differential signal into a signal compliant with a telephone signaling form using the DC voltage level V_{BAT} provided by the DC-to-DC converter 332.

Referring now to FIG. 1 and FIG. 2, in an alternative embodiment of the invention, the audio codec 116 doesn't analyze and process the first differential signal, but passes the data contained in the first differential signal to both the hardware and the software of the host 110 for processing via the south-bridge chip 210. For example, the host 110 analyzes the data contained in the first differential signal using at least a pre-loaded program (such as a VOIP-compliant program, or a software program capable of performing an analysis according to a dual tone multiple frequency signaling standard). If the analysis indicates that the data contained in the first differential signal are voice data intended for a remote device, the host 110 will send the data contained in the first differential signal to the remote device via the south-bridge chip 210, the network control circuit 118 and the internet. However, if the analysis indicates that the data contained in the first differential signal are keypress data, the host 110 will place a VOIP-based phone call according to the keypress data, or return signals to the communication control device 130.

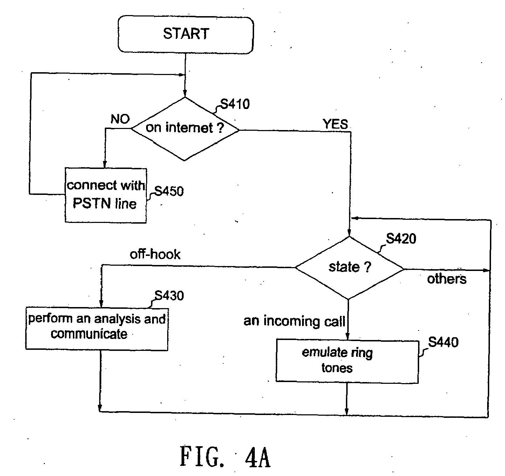

FIG. 4A is a flow chart illustrating a voice communication method according to the invention. In accordance with FIGs. 1, 2 and 4A, the voice communication method is detailed as follows.

Step S410: Determine if the host 110 is on the internet. If "YES" and the PSTN line has been in a on-hook state for a pre-determined period, the connection between the telephone 150 and the internet is thereafter initiated and the flow goes to the step S420; if "NO", the flow goes to the step S450. Note that other pre-determined conditions could be included to accordingly determine whether the connection between the telephone 150 and the internet needs to be initiated or not in an alternative embodiment of the step S410.

Step S420: Determine which state the PSTN line 280 is in. If the telephone handset is lifted, the flow advances to the step S430 with respect to the detecting signal generated by the detector 250. On the other hand, if there is an incoming PSTN-based phone call, the flow goes to the step S440. Apart from two above-mentioned conditions, the flow returns to the step S420 repeatedly if the host 110 maintains communication with the internet. In this embodiment, the step S420 may also determine if the host 110 is disconnected from the internet. If so, the flow returns to the step S410.

Step S430: An analysis of keypress data is performed and the communication is in progress. Then, the flow returns to the step S420.

Step S440: If the telephone 150 is on hook (i.e. the handset in the cradle), the control unit 223 generates a second digital signal with a ring tone and then the digital-to-analog converter 222 converts the second digital signal into an analog second differential signal. Next, the SLIC 230 converts the second differential signal into the third the differential signal compliant with the telephone signaling form. Finally, the third differential signal rings the bell in the telephone 150 via the switch 240. On the other hand, if the telephone 150 is in use, i.e., off hook, the operations of the step S440 will be performed as follows. The control unit 223 generates a second digital signal with a notifying tone and then the digital-to-analog converter 222 converts the second digital signal into an analog second differential signal. Next, the SLIC 230 converts the second differential signal into the third differential signal compliant with the telephone signaling form. Finally, the third differential signal is applied to the handset (the loudspeaker) in the telephone 150 via the switch 240 so as to notify the user of the incoming call. Then, the flow returns to the step S420.

Step S450: Establish or maintain the connection between the telephone 150 and the PSTN line 280 if the host 110 is not on the internet. Then, the flow returns to the step S410. In this step, while the telephone 150 attempts to connect with the PSTN line 280, the control unit 223 is employed to invert the second control signal and then transmit the inverted second control signal to the switch 240 via GPIO3 so as to control the connection between the telephone 150 and the PSTN line 280.

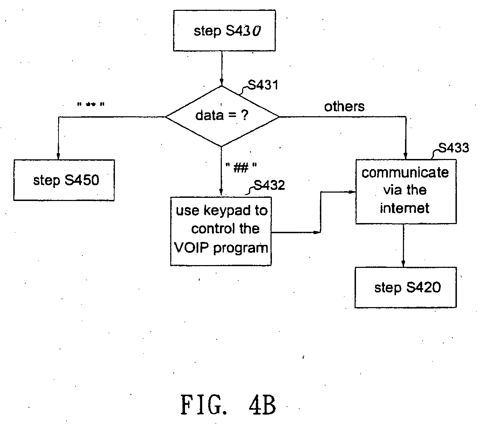

FIG. 4B is a flow chart illustrating a step of analyzing and communicating of FIG. 4A. In accordance with FIGs. 1, 2, 4A and 4B, the step S430 of analyzing and communicating is detailed as follows.

Step S431: First, the analog-to-digital converter 221 converts the analog first differential signal into the first digital signal. Next, according to a telephone signaling standard, the control unit 223 decodes the first digital signal and then analyzes what the first digital signal contains. If the first digital signal contains a first predetermined data, such as "##", the flow will go to the step S432. If the first digital signal contains a second predetermined data, such as "**", the flow will go to the step S450. This often occurs when the user is notified of an incoming PSTN-based phone call and then makes a mode switch to the PSTN for answering. Otherwise, the flow will go to step S433. In an alternative embodiment, more conditions can be added in the step S431 and a corresponding operation is thus performed if the first digital signal satisfies one of the conditions.

Step S432: If the keypress data contained in first digital signal are "##", it indicates that the user attempts to remotely control the operating interface of the VOIP-compliant program using the keypad on the telephone handset. For example, the user employs the numeral keys "2", "8", "4", "6", "5 or #" on the keypad to remotely control the cursor on the operating interface of the VOIP-compliant program for different directions and operations, like "↑", "↓", "←", "→", and "enter". Afterward, the control unit 223 sends the subsequent keypress data representing different directions via the south-bridge chip 210 to the host 110. Accordingly, the host 110 processes the keypress data using the VOIP-compliant program. Then, the flow advances to the step S433.

Step S433: If the keypress data contained in first digital signal are a telephone number, the telephone number will be provided to the host 110 via the south-bridge chip 210. Thereafter, the host 110 places an outgoing VOIP-based phone call using the VOIP-compliant program in an internet-to-PSTN mode (such as SKYPE OUT). Likewise, if the keypress data contained in first digital signal represent one of VOIP phone users, the keypress data will be provided to the host 110 via the south-bridge chip 210. The host 110 then places an outgoing VOIP-based phone call using the VOIP-compliant program in an internet-to-internet mode (i.e. a peer-to-peer mode). Further, after communication is initiated, the voice data contained in the first digital signal are sent to the internet via the VOIP-compliant program that is executed on the host 110. On the other hand, the voice data from the internet are provided to the telephone 150 via the communication control circuit 130 by the host 110 using the VOIP-compliant program. Note that the flow returns to the step S420 after the analysis and/or communication is terminated in this step.

While certain exemplary embodiments have been described and shown in the accompanying drawings, it is to be understood that such embodiments are merely illustrative of and not restrictive on the broad invention, and that this invention should not be limited to the specific construction and arrangement shown and described, since various other modifications may occur to those ordinarily skilled in the art.

## Claims

1. A voice communication system for achieving a PSTN communication and an internet communication, comprising:
a host (110) selected from the group comprising a personal computer (PC) and a portable electronic device for executing an operating system and an internet communication program to carry out the internet communication, the host comprising:
a processing module (112) for performing data processing;
a storage module (114) coupled to the processing module (112) for providing data access;
a network control circuit (118) coupled to the processing module (112) and the internet for controlling sending and receiving network packets; and
an audio circuit (116) coupled to the processing module (112) for performing sending and receiving operations of audio data;
a control device (130) coupled to the host (110) and a telephone (150), comprising:
an interface circuit (230) coupled to the audio circuit (116) of the host (110) for providing a signal (GPIO2) with a specified voltage level according to audio data generated by the audio circuit (116); and
a switching circuit (240) coupled to the interface circuit (230), a PSTN interface (282) and a telephone interface (281), for coupling the telephone interface (281) with one of the interface circuit (230) and the PSTN interface (282) according to a switching signal (GPIO3) generated by the host (110);
a high-pass filter (260) located between the audio circuit (116) of the host and the telephone interface (281) to filter low-frequency ring signals of the telephone (150) and to generate a first differential signal;
the audio circuit (116) further comprises:
analog-to digital converter (221) embedded in the audio circuit (116) for receiving and converting the first differential signal into a first digital signal, wherein the first digital signal includes voice data and/or keypress data, wherein voice data is sent from a control unit (223) of the audio circuit (116) to the processing module (112) to be processed using the hardware and the software of the host 110;
wherein the control unit (223) of the audio circuit (116) is adapted to decode the first digital signal output by the analog-to digital converter (221) according to a dual tone multiple frequency telephone signalling standard to obtain keypress data and is adapted to output the switching signal (GPIO3) according to the decoded keypress data.

2. The system of claim 1, wherein the portable electronic device is selected from the group comprising a notebook, a tablet PC, a personal digital assistant and a cellular phone.

3. The system of claim 1, wherein the processing module (112) comprises:
a processor for processing data; and
a chipset (210) coupled to the processor, the storage module (114), the network control circuit (118) and the audio circuit (116).

4. The system of claim 1, wherein the interface circuit (230) comprises a voltage level converter (332) for utilizing a first voltage level generated by the host (110) to provide the specified voltage level of the signal.

5. The system of claim 1, wherein the telephone interface (281) is adapted to be coupled with a telephone and the PSTN interface (282) is adapted to be coupled with the PSTN line (280).

6. The system of claim 5, wherein each of the telephone interface (281) and the PSTN interface (282) comprises a RJ-11 interface.

7. The system of claim 1, wherein the specified voltage level of the signal is suitable for the telephone (150).

8. The system of claim 1, wherein the specified voltage level of the signal is different from a voltage level of the audio data.

9. The system of claim 1, wherein the host (110) further comprises a housing and the control device (130) is set in the housing.

10. The system of claim 1, wherein the control device (130) is integrated with the host (110) or serves as an external device to the host (110).

11. The system of claim 1, wherein the control device (130) further comprises:
a detecting circuit (250) coupled to a telephone line located between the host (110) and the PSTN interface (282) for detecting the state of the PSTN line (280) and outputting a detecting result to the host (110).

12. The system of claim 1, wherein the audio circuit (116) comprises:
the control unit (223) coupled to the analog-to-digital converter (221) and the processing module (112), the control unit (223) is adapted to generate a first digital data to the processing module (112) based on the first digital signal and for outputting a second digital signal based on a second digital data provided by the processing module (112); and
a digital-to-analog converter (222) coupled to the control unit (223) and the interface circuit (230), for converting the second digital signal into a second analog signal and delivering the second analog signal to the interface circuit (230), wherein the interface circuit (230) provides the signal with the specified voltage level according to the second analog signal.

13. The system of claim 12, wherein the control unit (223) sends the decoded keypress data to the processing module (112); and wherein the keypress data are generated by using the telephone.

14. The system of claim 13, wherein the keypress data are generated to control the host (110).

15. The system of claim 13, wherein the keypress data are generated to control the internet communication program or the output of the switching signal.

16. The system of claim 13, wherein the processing module (112) decodes the first digital data to obtain keypress data while the first digital data comprises the keypress data.

17. The system of claim 16, wherein the keypress data are generated to control the host (110).

18. The system of claim 17, wherein the keypress data are generated in particular to control the internet communication program or the output of the switching signal.

19. The system of claim 1, wherein the host (110) further comprises a RJ 45 interface and thereby the network control circuit (118) coupled to the internet via the RJ 45 interface.

20. The system of claim 1, wherein the filter (260) filters low-frequency ring signals.

21. Method for providing a communication between a telephone (150) and a PSTN line (280) or between the telephone (150) and the internet, the method being carried out by a system as claimed in claim 1 and comprising: the steps of:
determining if the host (110) is on the internet (S410);
- if the host (110) is not on the internet, connect the telephone (150) with the PSTN line (280);
- if the host (110) is on the internet and the PSTN line has been in a on-hook state for a pre-determined period, initiating connection between the telephone (150) and the internet;
- determining which state the PSTN line (280) is in (S420)
- if the telephone handset is lifted, perform an analysis and communicate (S430) to detect a signal generated by control device (130);
- if there is an incoming PSTN-based call, emulate ring tones (S440) if the telephone is on-hook and emulate a notifying tone if the telephone is in use,
wherein the analysis (S430) includes to analyse whether a first signal contains a first, a second or third predetermined data, wherein
(S432) the first predetermined data indicate that the user attempts to remotely control an operating interface of a VOIP-program on the host (110) using the keypad of the telephone (150);
(S433) the second predetermined data include a telephone number, which is provided to the host for placing a outgoing VOIP-based phone call; and
(S450) the third predetermined data indicate to establish or maintain the connection between the telephone (150) and the PSTN line (280).

## Patentansprüche

1. Sprachkommunikationssystem zum Ausführen einer PSTN-Kommunikation und einer Internetkommunikation, das umfasst:
einen Host (110), der aus der Gruppe ausgewählt ist, die einen Personalcomputer (PC) und eine tragbare elektronische Vorrichtung zum Ausführen eines Betriebssystems und ein Internetkommunikationsprogramm zum Ausführen der Internetkommunikation umfasst, wobei der Host umfasst:
ein Verarbeitungsmodul (112) zum Ausführen einer Datenverarbeitung;
ein Speichermodul (114), das an das Verarbeitungsmodul (112) gekoppelt ist, zum Bereitstellen eines Datenzugriffs;
eine Netzsteuerschaltung (118), die an das Verarbeitungsmodul (112) und das Internet gekoppelt ist, zum Steuern des Sendens und Empfangens von Netzpaketen; und
eine Audioschaltung (116), die an das Verarbeitungsmodul (112) gekoppelt ist, zum Ausführen von Sende- und Empfangsvorgängen von Audiodaten;
eine Steuervorrichtung (130), die an den Host (110) und ein Telefon (150) gekoppelt ist, die umfasst:
eine Schnittstellenschaltung (230), die an die Audioschaltung (116) des Host (110) gekoppelt ist, zum Liefern eines Signals (GPIO2) mit einem bestimmten Spannungspegel gemäß den durch die Audioschaltung (116) erzeugten Audiodaten; und
einen Schaltschaltkreis (240), der an die Schnittstellenschaltung (230), eine PSTN-Schnittstelle (282) und eine Telefonschnittstelle (281) gekoppelt ist, um die Telefonschnittstelle (281) mit der Schnittstellenschaltung (230) oder der PSTN-Schnittstelle (282) gemäß einem durch den Host (110) erzeugten Schaltsignal (GPIO3) zu koppeln;
ein Hochpassfilter (260), das sich zwischen der Audioschaltung (116) des Host und der Telefonschnittstelle (281) befindet, um Niederfrequenzklingelsignale des Telefons (150) zu filtern und ein erstes Differenzialsignal zu erzeugen;
wobei die Audioschaltung (116) ferner umfasst:
einen Analog/Digital-Umsetzer (221), der in die Audioschaltung (116) eingebettet ist, um das erste Differenzialsignal zu empfangen und in ein erstes Digitalsignal umzusetzen, wobei das erste Digitalsignal Sprachdaten und/oder Tastendruckdaten enthält, wobei Sprachdaten von einer Steuereinheit (223) der Audioschaltung (116) an das Verarbeitungsmodul (112) gesendet werden, um unter Verwendung der Hardware und der Software des Host 110 verarbeitet zu werden;
wobei die Steuereinheit (223) der Audioschaltung (116) ausgelegt ist, das erste durch den Analog/Digital-Umsetzer (221) ausgegebene Digitalsignal gemäß einem Doppeltonmehrfachfrequenz-Telefonsignalgebungsstandard zu decodieren, um Tastendruckdaten zu erhalten, und ausgelegt ist, das Schaltsignal (GPIO3) gemäß den decodierten Tastendruckdaten auszugeben.

2. System nach Anspruch 1, wobei die tragbare elektronische Vorrichtung aus der Gruppe ausgewählt ist, die ein Notebook, einen Tablet-PC, einen persönlichen digitalen Assistenten und ein Mobiltelefon umfasst.

3. System nach Anspruch 1, wobei das Verarbeitungsmodul (112) umfasst:
einen Prozessor zum Verarbeiten von Daten; und
einen Chipsatz (210), der an den Prozessor, das Speichermodul (114), die Netzsteuerschaltung (118) und die Audioschaltung (116) gekoppelt ist.

4. System nach Anspruch 1, wobei die Schnittstellenschaltung (230) einen Spannungspegelumsetzer (332) umfasst, um einen durch den Host (110) erzeugten ersten Spannungspegel zu verwenden, um den bestimmten Spannungspegel des Signals zu liefern.

5. System nach Anspruch 1, wobei die Telefonschnittstelle (281) ausgelegt ist, mit einem Telefon gekoppelt zu sein, und die PSTN-Schnittstelle (282) ausgelegt ist, mit der PSTN-Leitung (280) gekoppelt zu sein.

6. System nach Anspruch 5, wobei die Telefonschnittstelle (281) und die PSTN-Schnittstelle (282) eine RJ-11-Schnittstelle umfassen.

7. System nach Anspruch 1, wobei der bestimmte Spannungspegel des Signals für das Telefon (150) geeignet ist.

8. System nach Anspruch 1, wobei der bestimmte Spannungspegel des Signals von einem Spannungspegel der Audiodaten verschieden ist.

9. System nach Anspruch 1, wobei der Host (110) ferner ein Gehäuse umfasst und die Steuervorrichtung (130) in das Gehäuse eingebaut ist.

10. System nach Anspruch 1, wobei die Steuervorrichtung (130) in den Host (110) integriert ist oder als eine zu dem Host (110) externe Vorrichtung dient.

11. System nach Anspruch 1, wobei die Steuervorrichtung (130) ferner umfasst:
eine Detektionsschaltung (250), die an eine Telefonleitung gekoppelt ist, die sich zwischen dem Host (110) und der PSTN-Schnittstelle (282) befindet, zum Detektieren des Zustands der PSTN-Leitung (280) und Ausgeben eines Detektionsergebnisses an den Host (110).

12. System nach Anspruch 1, wobei die Audioschaltung (116) umfasst:
die Steuereinheit (223), die an den Analog/Digital-Umsetzer (221) und das Verarbeitungsmodul (112) gekoppelt ist, wobei die Steuereinheit (223) ausgelegt ist, erste digitale Daten für das Verarbeitungsmodul (112) anhand des ersten Digitalsignals zu erzeugen, und zum Ausgeben eines zweiten Digitalsignals aufgrund von zweiten durch das Verarbeitungsmodul (112) gelieferten digitalen Daten; und
einen Digital/Analog-Umsetzer (222), der an die Steuereinheit (223) und die Schnittstellenschaltung (230) gekoppelt ist, um das zweite Digitalsignal in ein zweites Analogsignal umzusetzen und das zweite Analogsignal an die Schnittstellenschaltung (230) zu liefern, wobei die Schnittstellenschaltung (230) das Signal mit dem bestimmten Spannungspegel gemäß dem zweiten Analogsignal liefert.

13. System nach Anspruch 12, wobei die Steuereinheit (223) die decodierten Tastendruckdaten an das Verarbeitungsmodul (112) sendet; und wobei die Tastendruckdaten unter Verwendung des Telefons erzeugt werden.

14. System nach Anspruch 13, wobei die Tastendruckdaten erzeugt werden, um den Host (110) zu steuern.

15. System nach Anspruch 13, wobei die Tastendruckdaten erzeugt werden, um das Internetkommunikationsprogamm oder die Ausgabe des Schaltsignals zu steuern.

16. System nach Anspruch 13, wobei das Verarbeitungsmodul (112) die ersten digitalen Daten decodiert, um Tastendruckdaten zu erhalten, während die ersten digitalen Daten die Tastendruckdaten umfassen.

17. System nach Anspruch 16, wobei die Tastendruckdaten erzeugt werden, um den Host (110) zu steuern.

18. System nach Anspruch 17, wobei die Tastendruckdaten insbesondere erzeugt werden, um das Internetkommunikationsprogramm oder die Ausgabe des Schaltsignals zu steuern.

19. System nach Anspruch 1, wobei der Host (110) ferner eine RJ 45-Schnittstelle umfasst und die Netzsteuerschaltung (118) dadurch über die RJ 45-Schnittstelle an das Internet gekoppelt ist.

20. System nach Anspruch 1, wobei das Filter (260) Niederfrequenzklingelsignale filtert.

21. Verfahren zum Bereitstellen einer Kommunikation zwischen einem Telefon (150) und einer PSTN-Leitung (280) oder zwischen dem Telefon (150) und dem Internet, wobei das Verfahren durch ein System nach Anspruch 1 ausgeführt wird und die folgenden Schritte umfasst:
Bestimmen, ob der Host (110) mit dem Internet (S410) verbunden ist;
- dann, wenn der Host (100) nicht mit dem Internet verbunden ist, Verbinden des Telefons (150) mit der PSTN-Leitung (280);
- dann, wenn der Host (110) mit dem Internet verbunden ist und die PSTN-Leitung für eine vorgegebene Zeitdauer in einem aufgelegten Zustand war, Einleiten einer Verbindung zwischen dem Telefon (150) und dem Internet;
- Bestimmen, in welchem Zustand die PSTN-Leitung (280) ist (S420);
- dann, wenn der Telefonhörer abgehoben ist, Ausführen einer Analyse und Kommunizieren (S430), um ein durch die Steuervorrichtung (130) erzeugtes Signal zu detektieren;
- dann, wenn ein ankommender PSTN-basierter Anruf vorhanden ist, Emulieren von Klingeltönen (S440), wenn das Telefon aufgelegt ist, und Emulieren eines Benachrichtigungstons, wenn das Telefon im Gebrauch ist,
wobei die Analyse (S430) enthält, zu analysieren, ob ein erstes Signal erste, zweite oder dritte vorgegebene Daten enthält, wobei
(S432) die ersten vorgegebenen Daten angeben, dass der Anwender versucht, entfernt eine Bedienungsschnittstelle eines VOIP-Programms auf dem Host (110) unter Verwendung des Tastenfelds des Telefons (150) zu steuern;
(S433) die zweiten vorgegebenen Daten eine Telefonnummer enthalten, die für den Host bereitgestellt wird, um einen herausgehenden VOIP-basierten Anruf zu tätigen; und
(S450) die dritten vorgegebenen Daten angeben, die Verbindung zwischen dem Telefon (150) und der PSTN-Leitung (280) einzurichten oder aufrechtzuerhalten.

## Revendications

1. Système de communication vocale pour réaliser une communication PSTN et une communication Internet, comprenant :
un hôte (110) sélectionné dans le groupe se composant d'un ordinateur personnel, PC, et d'un dispositif électronique portable pour exécuter un système d'exploitation et un programme de communication Internet pour effectuer la communication Internet, l'hôte comprenant :
un module de traitement (112) pour effectuer un traitement de données ;
un module de mémorisation (114) couplé au module de traitement (112) pour fournir un accès de données ;
un circuit de commande de réseau (118) couplé au module de traitement (112) et à l'Internet pour commander l'envoi et la réception de paquets de réseau ; et
un circuit audio (116) couplé au module de traitement (112) pour effectuer des opérations d'envoi et de réception de données audio ;
un dispositif de commande (130) couplé à l'hôte (110) et à un téléphone (150), comprenant :
un circuit d'interface (230) couplé au circuit audio (116) de l'hôte (110) pour fournir un signal (GPI02) avec un niveau de tension spécifié en fonction de données audio générées par le circuit audio (116) ; et
un circuit de commutation (240) couplé au circuit d'interface (230), à une interface PSTN (282) et à une interface téléphonique (281), pour coupler l'interface téléphonique (281) à l'un du circuit d'interface (230) et de l'interface PSTN (282) en fonction d'un signal de commutation (GPI03) généré par l'hôte (110) ;
un filtre passe-haut (260) situé entre le circuit audio (116) de l'hôte et l'interface téléphonique (281) pour filtrer des signaux de sonnerie à basse fréquence du téléphone (150) et pour générer un premier signal différentiel ;
le circuit audio (116) comprend en outre :
un convertisseur analogique-numérique (221) intégré au circuit audio (116) pour recevoir et convertir le premier signal différentiel en un premier signal numérique, dans lequel le premier signal numérique comprend des données vocales et/ou des données de pression de touche, dans lequel des données vocales sont envoyées d'une unité de commande (223) du circuit audio (116) au module de traitement (112) pour être traitées en utilisant le matériel et le logiciel de l'hôte (110) ;
dans lequel l'unité de commande (223) du circuit audio (116) est apte à décoder le premier signal numérique délivré par le convertisseur analogique-numérique (221) selon une norme de signalisation téléphonique à fréquences multiples et à double tonalité pour obtenir des données de pression de touche et est apte à délivrer le signal de commutation (GPI03) en fonction des données de pression de touche décodées.

2. Système selon la revendication 1, dans lequel le dispositif électronique portable est sélectionné dans le groupe se composant d'un notebook, d'une tablette PC, d'un assistant numérique personnel et d'un téléphone cellulaire.

3. Système selon la revendication 1, dans lequel le module de traitement (112) comprend :
un processeur pour traiter des données ; et
un chipset (210) couplé au processeur, au module de mémorisation (114), au circuit de commande de réseau (118) et au circuit audio (116).

4. Système selon la revendication 1, dans lequel le circuit d'interface (230) comprend un convertisseur de niveau de tension (332) pour utiliser un premier niveau de tension généré par l'hôte (110) afin de fournir le niveau de tension spécifié du signal.

5. Système selon la revendication 1, dans lequel l'interface téléphonique (281) est apte à être couplée à un téléphone et l'interface PSTN (282) est apte à être couplée à la ligne PSTN (280).

6. Système selon la revendication 5, dans lequel chacune de l'interface téléphonique (281) et de l'interface PSTN (282) comprend une interface RJ-11.

7. Système selon la revendication 1, dans lequel le niveau de tension spécifié du signal est approprié pour le téléphone (150).

8. Système selon la revendication 1, dans lequel le niveau de tension spécifié du signal est différent d'un niveau de tension des données audio.

9. Système selon la revendication 1, dans lequel l'hôte (110) comprend en outre un boîtier et le dispositif de commande (130) est disposé dans le boîtier.

10. Système selon la revendication 1, dans lequel le dispositif de commande (130) est intégré à l'hôte (110) ou sert de dispositif externe à l'hôte (110).

11. Système selon la revendication 1, dans lequel le dispositif de commande (130) comprend en outre :
un circuit de détection (250) couplé à une ligne téléphonique située entre l'hôte (110) et l'interface PSTN (282) pour détecter l'état de la ligne PSTN (280) et délivrer un résultat de détection à l'hôte (110).

12. Système selon la revendication 1, dans lequel le circuit audio (116) comprend :
l'unité de commande (223) couplée au convertisseur analogique-numérique (221) et au module de traitement (112), l'unité de commande (223) est apte à générer des premières données numériques pour le module de traitement (112) sur la base du premier signal numérique et à délivrer un deuxième signal numérique sur la base de deuxièmes données numériques fournies par le module de traitement (112) ; et
un convertisseur numérique-analogique (222) couplé à l'unité de commande (223) et au circuit d'interface (230), pour convertir le deuxième signal numérique en un deuxième signal analogique et délivrer le deuxième signal analogique au circuit d'interface (230), dans lequel le circuit d'interface (230) fournit le signal avec le niveau de tension spécifié en fonction du deuxième signal analogique.

13. Système selon la revendication 12, dans lequel l'unité de commande (223) envoie les données de pression de touche décodées au module de traitement (112) ; et dans lequel les données de pression de touche sont générées en utilisant le téléphone.

14. Système selon la revendication 13, dans lequel les données de pression de touche sont générées pour commander l'hôte (110).

15. Système selon la revendication 13, dans lequel les données de pression de touche sont générées pour commander le programme de communication Internet ou la sortie du signal de commutation.

16. Système selon la revendication 13, dans lequel le module de traitement (112) décode les premières données numériques pour obtenir des données de pression de touche pendant que les premières données numériques comprennent les données de pression de touche.

17. Système selon la revendication 16, dans lequel les données de pression de touche sont générées pour commander l'hôte (110).

18. Système selon la revendication 17, dans lequel les données de pression de touche sont générées en particulier pour commander le programme de communication Internet ou la sortie du signal de commutation.

19. Système selon la revendication 1, dans lequel l'hôte (110) comprend en outre une interface RJ 45 et de ce fait le circuit de commande de réseau (118) couplé à l'Internet par l'intermédiaire de l'interface RJ 45.

20. Système selon la revendication 1, dans lequel le filtre (260) filtre des signaux de sonnerie à basse fréquence.

21. Procédé destiné à fournir une communication entre un téléphone (150) et une ligne PSTN (280) ou entre le téléphone (150) et l'Internet, le procédé étant effectué par un système selon la revendication 1, et comprenant les étapes de :
la détermination si l'hôte (110) est sur l'Internet (S410) ;
- si l'hôte (110) n'est pas sur l'Internet, la connexion du téléphone (150) à la ligne PSTN (280) ;
- si l'hôte (110) est sur l'Internet et la ligne PSTN est dans un état raccroché au cours d'une période prédéterminée, l'établissement de la connexion entre le téléphone (150) et l'Internet;
- la détermination de l'état dans lequel se trouve la ligne PSTN (280) (S420) ;
- si le combiné téléphonique est décroché, l'exécution d'une analyse et d'une communication (S430) pour détecter un signal généré par un dispositif de commande (130) ;
- s'il y a un appel basé sur PSTN entrant, l'émulation de sonneries (S440) dans le cas où le téléphone est raccroché et l'émulation d'une tonalité de notification si le téléphone est en cours d'utilisation,
dans lequel l'analyse (S430) comprend l'analyse pour déterminer si un premier signal contient des premières, deuxièmes ou troisièmes données prédéterminées, dans lequel
(S432) les premières données indiquent que l'utilisateur essaye de commander à distance une interface d'exploitation d'un programme VoIP sur l'hôte (110) en utilisant le clavier du téléphone (150) ;
(S433) les deuxièmes données prédéterminées comprennent un numéro de téléphone, qui est fourni à l'hôte pour passer un appel téléphonique basé sur VoIP sortant ; et
(S450) les troisièmes donnés prédéterminées indiquent d'établir ou de maintenir la connexion entre le téléphone (150) et la ligne PSTN (280).
